# EUROPÄISCHE PATENTSCHRIFT

(11) **EP 3 721 121 B1**
(45) Veröffentlichungstag und Bekanntmachung des Hinweises auf die Patenterteilung: **23.09.2026**
(21) Anmeldenummer: 18814549.4
(22) Anmeldetag: 30.11.2018
(51) Int. Cl.: F16K 11/22

(54) **STELLVENTILANORDNUNG UND VERFAHREN ZUM BETÄTIGEN EINER STELLVENTILANORDNUNG**
ADJUSTMENT VALVE ASSEMBLY AND METHOD FOR OPERATING AN ADJUSTMENT VALVE ASSEMBLY
DISPOSITIF DE SOUPAPE D'ACTIONNEMENT ET PROCÉDÉ D'ACTIONNEMENT D'UN DISPOSITIF DE SOUPAPE D'ACTIONNEMENT

(30) Priorität: 08.12.2017 DE 102017129246
(43) Veröffentlichungstag der Anmeldung: 14.10.2020
(73) Patentinhaber: Samson Aktiengesellschaft, 60314 Frankfurt am Main (DE)
(72) Erfinder: KOLBENSCHLAG, Stefan, 64291 Darmstadt (DE)
(74) Vertreter: Schmid, Nils T.F.
(86) Internationale Anmeldenummer: PCT/EP2018/083207
(87) Internationale Veröffentlichungsnummer: WO 2019/110450

(56) Entgegenhaltungen:
- DE-A1- 3 016 408
- US-A- 3 502 105
- US-A- 4 170 245
- US-A1- 2013 181 152

## Beschreibung

Die Erfindung betrifft eine Stellventilanordnung zum Einstellen einer Prozessfluidströmung in einer prozesstechnischen Anlage, wie einem Kraftwerk, einer chemischen Anlage, einer Lebensmittel verarbeitenden Anlage oder dergleichen. Die Erfindung betrifft auch ein Verfahren zum Betätigen einer Stellventilanordnung zum Einstellen einer Prozessfluidströmung einer prozesstechnischen Anlage.

Von CN 2013 91622 Y ist eine Hubventilanordnung zum Einstellen einer Prozessfluidströmung einer prozesstechnischen Anlage bekannt, bei der in dem Gehäuse der Hubventilanordnung, welche einen Eingang und einen Ausgang für das Prozessfluid aufweist, in einer senkrecht zu der Durchströmungsrichtung des Gehäuses angeordneten Ventilsitzebene acht Ventilsitze mit unterschiedlich großen Öffnungsdurchmessern vorgesehen sind, mit denen acht entsprechend geformte Hubventilglieder öffnend oder schließend kooperieren können. Die Größen der unterschiedlichen Öffnungsdurchmesser sollen in einem Verhältnis entsprechend einem binären Zählsystem zueinander stehen, also beispielsweise in dem Verhältnis 1:2:4:8:16:32:64:128. Mit dieser Hubventilanordnung soll eine hohe Regelungspräzision erreichbar sein. Allerdings erfordert die Hubventilanordnung eine komplizierte Steuerung zum Erreichen einzelner gewünschter Öffnungsstellungen. Ferner hat sich gezeigt, dass die Ansteuerung und Betätigung der Hubventilanordnung gemäß CN 2013 91622 Y mit einem hohen Energieverbrauch einhergeht. Weitere Hubventilanordnungen werden beispielsweise in der US 4 170 245 A, 25 der US 3 502 105 A, der US 2013/181152 A1 und der DE 30 16 408 A1 beschrieben.

In Folge der zahlreichen Hubventile ist der Aufbau kompliziert und großvolumig, so dass die Hubventilanordnung n sehr groß und schwer ist, was sie für einige Anwendungen ungeeignet macht.

Es ist eine Aufgabe der Erfindung, die Nachteile des Stands der Technik zu überwinden, insbesondere eine Stellventilanordnung und ein Verfahren zum Betätigen einer Stellventilanordnung bereitzustellen, die möglichst wenig fehleranfällig, unkompliziert im Aufbau, Wartung und Steuerung und energieeffizient ist. Diese Aufgabe wird gelöst durch den Gegenstand der unabhängigen Ansprüche.

Demnach ist eine Stellventilanordnung zum Einstellen einer Prozessfluidströmung einer prozesstechnischen Anlage vorgesehen. Die prozesstechnische Anlage kann beispielsweise ein Kraftwerk, wie ein Nuklearkraftwerk, eine chemische Anlage, wie eine petrochemische Anlage, eine Lebensmittel verarbeitende Anlage, wie eine Brauerei, oder dergleichen sein. Die Stellventilanordnung umfasst wenigstens ein Hub-Feinstellventil mit einem Feinstellantrieb zum vorzugsweise stufenlosen Feineinstellen einer Hub-Feinstellventil-Durchflussfläche. Ferner umfasst die Stellventilanordnung wenigstens ein Auf-/Zu-Hubventil mit einem diskreten Stellaktor zum Stellen des Auf- /Zu-Hubventils entweder in eine Öffnungsstellung, in der eine Hubventil-Durchflussfläche insbesondere vollständig freigegeben ist, oder in eine Schließstellung, in der die Hubventil-Durchflussfläche verschlossen ist.

Bei der Stellventilanordnung ist eine kumulierte Gesamt-Durchflussfläche der Stellventilanordnung durch die Hub-Feinstellventil-Durchflussfläche des wenigstens einen Hub-Feinstellventil und durch die Hubventil-Durchflussfläche(n) des wenigstens einen Auf-/Zu-Hubventils definiert. Das wenigstens eine Hub-Feinstellventil, vorzugsweise genau ein Hub-Feinstellventil, und das wenigstens eine Auf-/Zu-Hubventil sind bezüglich des Prozessfluides zueinander parallelgeschaltet. Die kumulierte Gesamt-Durchflussfläche der Stellventilanordnung ist durch die bezüglich des Prozessfluides parallel angeordneten Durchflussflächen (Hub-Feinstellventil-Durchflussfläche(n) bzw. Hubventil-Durchflussfläche(n)) des wenigstens einen Hub-Feinstellventils und des wenigstens einen Auf-/Zu-Hubventils der Stellventilanordnung gebildet. Beispielsweise kann bei vollständig geschlossenem Auf-/Zu-Hubventil und vollständig geschlossenem Hub-Feinstellventil eine kumulierte Gesamt-Durchflussfläche der Größe "Null" bzw. effektiv keine Durchflussfläche bereitgestellt sein. Eine 100%-ige Gesamt-Durchflussfläche ist in dem Zustand der Stellventilanordnung bereitgestellt, indem alle Auf-/Zu-Hubventile und Hub-Feinstellventile der Stellventilanordnung jeweils einen vollständig geöffneten bzw. weitestmöglich geöffneten Zustand einnehmen. Beliebige Gesamt-Durchflussflächen in dem Bereich zwischen 0% und 100% der möglichen Gesamt-Durchflussfläche der Stellventilanordnung sollen erreichbar sein durch Einstellen der Auf-/Zu-Hubventile und der Hub-Feinstellventile der Stellventilanordnung.

Ein Hub-Feinstellventil kann einen Ventilsitz, der eine Durchflussöffnung definiert, und ein Hub-Feinstell-Ventilglied umfassen, wie einen Feinstell-Kolben, welches die Durchflussfläche des Ventilsitzes des Feinstellventils vollständig schließend belegen kann. Ferner kann ein Hub-Feinstellventil einen Feinstellantrieb zum vorzugsweise stufenlosen Feineinstellen einer Relativstellung des Hub-Feinstell-Ventilgliedes relativ zu dem Hub-Feinstell-Ventilsitz umfassen. Vorzugsweise kann der Feinstellantrieb eine Relativstellung des Hub-Feinstell-Ventilgliedes relativ zu dem Hub-Feinstell-Ventilsitz stufenlos einstellen, insbesondere zwischen einer vollständig geschlossenen und einer vollständig (100%) geöffneten Stellung. Der Feinstellantrieb kann mehrere unterschiedliche effektive Hub-Feinstell-Ventil-Durchflussflächen einstellen, insbesondere durch Bewirken unterschiedlicher Relativstellungen des Hub-Feinstellventil-Kolbens relativ zu dem Hub-Feinstellventil-Sitz. Beispielsweise kann der Feinstellantrieb dazu ausgelegt sein, den Feinstellventil-Kolben vorzugsweise linear entlang einer Hub-Längsachse um mehrere Zehntel-Millimeter (beispielsweise in einem Bereich von 0,0 bis 1,0 mm), um mehrere Millimeter (beispielsweise in einem Bereich von 0 mm bis 10 mm) oder in einem Bereich mehrerer Zentimeter (beispielsweise 0 cm bis 10 cm) bewegen. Der Feinstellantrieb soll dazu in der Lage sein, wenigstens drei unterschiedliche Hub-Feinstellventil-Durchflussflächen bewirken, insbesondere eine vollständig geschlossene 0%-Durchflussfläche, eine vollständig geöffnete 100%-Hub-Feinstellventil-Durchflussfläche und wenigstens eine in dem Bereich zwischen 1% und 99%-Hub-Feinstellventil-Durchflussfläche liegende Zwischenstellung. Vorzugsweise ist der Feinstellantrieb dazu ausgelegt, wenigstens 5, wenigstens 10, wenigstens 20, wenigstens 50 oder wenigstens 100 einzelne unterschiedliche Hub-Feinstellventil-Durchflussflächen des Hub-Feinstellventils einzustellen. Es kann besonders bevorzugt sein, dass der Feinstellantrieb unterschiedlichste Hub-Feinstellventil-Durchflussflächen in dem Bereich von 0% bis 100% der möglichen Fläche der Durchflussöffnungen des Hub-Feinstellventils stufenlos und/oder kontinuierlich einstellen kann. Ein Hub-Feinstellventil mit einer stufenlosen Feineinstellbarkeit zwischen einem vollständig geschlossenen und einem vollständig geöffneten Zustand zahlreichen Zwischenzuständen kann als analoges Hubventil bezeichnet sein.

Ein Auf-/Zu-Hubventil kann einen Ventilsitz, welcher eine Durchflussfläche des Hubventils definiert, ein Hubventilglied, insbesondere einen Kolben, und einen diskreten Stellaktor umfassen. Der diskrete Stellaktor des Auf-/Zu-Hubventils betätigt das Auf-/Zu-Hubventilglied. Der diskrete Stellaktor ist insbesondere dazu ausgelegt, das Auf-/Zu-Hubventilglied in genau eine von genau zwei möglichen Stellungen zu bringen. Vorzugsweise ist eine der beiden möglichen Stellungen des Ventilglieds des Auf-/Zu-Hubventils eine Schließstellung, in der die Hubventil-Durchflussfläche durch Bewegung des Ventilsitzes mit dem Ventilglied vollständig insbesondere abdichtend verschlossen ist. Für die bevorzugte zweite diskrete Stellung des Hubventilgliedes des Auf-/Zu-Hubventils veranlasst der diskrete Stellaktor das Hubventilglied dazu, eine Öffnungsstellung einzunehmen, in der die Durchflussfläche vollständig freigegeben ist. Vorzugsweise ist es betriebsgemäß ausgeschlossen, dass das Auf-/Zu-Hubventilglied stabil eine Zwischenstellung zwischen der Öffnungsstellung und der Schließstellung einnimmt, was beispielsweise konstruktiv und/oder steuerungstechnisch realisiert sein kann. Das Auf-/Zu-Hubventilglied wird von dem diskreten Stellaktor betätigt. Der diskrete Stellaktor kann als digitaler Stellaktor bezeichnet werden, da er eine vollständig geschlossene Stellung (o) und eine vollständig geöffnete Stellung (1) bewirken kann, jedoch keine Stellungen dazwischen stabil erreichen kann. Ein Auf-/Zu-Hubventilglied mit diskretem Stellaktor kann als digitales Hubventil bezeichnet sein.

Die Stellventilanordnung hat also wenigstens zwei Hubventile, nämlich wenigstens ein Auf-/Zu-Hubventil und wenigstens ein Hub-Feinstellventil. Von den wenigstens zwei Hubventilen der Stellventilanordnung ist eines (das Auf-Zu-Hubventil) dazu ausgelegt, exklusiv eine von zwei zusätzlichen bzw. möglichen Stellungen, nämliche eine Schließstellung und eine Öffnungsstellung, einzunehmen. Ferner umfasst die Stellventilanordnung wenigstens ein weiteres Hubventil, nämlich das Hub-Feinstellventil, welches wahlweise eine Schließstellung oder eine Öffnungsstellung oder eine wählbare, zwischen der Schließstellung und der Öffnungsstellung liegende Stellung einnehmen kann. Gemäß einer speziellen Ausführung kann eine Stellventilanordnung genau ein Hub-Feinstellventil und mehrere Auf-/Zu-Hubventile, beispielsweise genau 2 oder genau 3, umfassen.

Mit der erfindungsgemäßen Stellventilanordnung kann schnell, unkompliziert und präzise eine beliebige kumulierte Gesamt-Durchflussfläche eingestellt werden, wobei dank der Kombination von wenigstens einem Auf-/Zu-Hubventil und wenigstens einem Hub-Feinstellventil gegenüber üblichen Ventilen eine deutliche Energieersparnis erreicht werden kann. Um mit derselben Präzision dieselbe Anzahl unterschiedlicher Gesamt-Durchflussflächen wie beispielsweise das in CN 2013/91622 Y beschriebene Hubstellventil bereitstellen zu können, sind bei der erfindungsgemäßen Stellventilanordnung wesentlich weniger Antriebe bzw. Aktoren erforderlich, so dass Investitionskosten, Bauraum, Komplexität, Wartungsaufwand und Energieverbrauch erheblich reduziert werden können.

Gemäß einer Ausführung einer Stellventilanordnung sind der vorzugsweise analoge Feinstellantrieb des wenigstens einen Hub-Feinstellventils und/oder der diskrete Stellaktor des wenigstens einen Auf-/Zu-Hubventils in einem Prozessfluid führenden Abschnitt, wie einem Rohrabschnitt, des Gehäuses der Stellventilanordnung angeordnet. Gemäß dieser Ausführung sind der Feinstellantrieb des Feinstellventils und/oder der Stellaktor des Auf-/Zu-Hubventils von Prozessfluid umströmt. Insbesondere sind der Feinstellantrieb und/oder der Stellaktor derart in dem Gehäuse angeordnet, dass der Feinstellantrieb und/oder der Stellaktor, vorzugsweise in Richtung einer jeweiligen Hub-Längsachse entlang der jeweiligen Längserstreckung, von Prozessfluid insbesondere vollumfänglich umströmt sind. Insbesondere kann eine Hauptströmungsrichtung des Prozessfluides in dem Abschnitt, insbesondere in dem Gehäuse, im Wesentlichen der Hub-Längsachse des wenigstens einen Hub-Feinstellventils und/oder des wenigstens einen Auf-/Zu-Hubventils entsprechen. Gemäß einer bevorzugten Ausführung kann die Verbindungslinie von einem Mittelpunkt eines Einganges des Abschnitts, insbesondere des Gehäuses, zu einem Ausgang des Abschnittes, insbesondere des Gehäuses, koaxial oder zumindest parallel zu der Hub-Längsachse des Hub-Feinstellventils und/oder des Auf-/Zu-Hubventils verlaufen. Es ist auch denkbar, dass zwischen einer solchen Verbindungslinie und der Hub-Längsachse ein Winkel vorzugsweise kleiner als 45°, insbesondere kleiner als 20°, besonders bevorzugt kleiner als 10°, vorhanden sein kann. Insbesondere ist das Gehäuse realisiert als ein Rohr mit einem eingangsseitigen Befestigungsflansch und/oder einem ausgangsseitigen Befestigungsflansch, wobei Rohreingang und/oder Rohrausgang insbesondere dieselbe vorzugsweise kreisförmige Querschnittsform haben können.

In dem Gehäuse, beispielsweise dem Rohr, ist wenigstens eine ortsfeste Trennwand zwischen der Eingangsseite und der Ausgangsseite angebracht, in der die Ventilsitze mit deren jeweiligen Öffnungsflächen angebracht sind. Beispielsweise kann eine Trennwand der Stellventilanordnung in Form einer scheibenartigen Wandplatte in dem Rohr oder anderen Gehäuse vorgesehen sein, so dass bei geschlossenen Auf-/Zu-Hubventilen und geschlossenen Hub-/Feinstellventilen durch die geschlossenen Ventile und die Trennwand fluidisch voneinander getrennte Kompartimente realisiert sind, nämlich wenigstens ein eingangsseitiges Kompartiment und ein ausgangsseitiges Kompartiment. Von dem eingangsseitigen Kompartiment des Gehäuses, insbesondere des Rohrs, zu dem ausgangsseitigen Kompartiment des Gehäuses, insbesondere des Rohrs, kann durch Öffnen eines der Ventile, also wenigstens eines Auf-/Zu-Hubventils und/oder wenigstens eines Hub-/Feinstellventils, eine fluidische Verbindung geschaffen werden. Diese Ausgestaltung der Stellventilanordnung ermöglicht eine besonders kompakte Bauweise. Eine einfache Wartung kann insbesondere dadurch erreicht werden, dass zu Wartungszwecken, das Gehäuse, das vorzugsweise rohrartig ist, als Ganzes entfernt und durch eine andere Stellventilanordnung mit identischen Ventilen und identischem Gehäuse ausgetauscht wird. Es kann auch ein Austausch einer ersten Stellventilanordnung durch eine andere, zweite Stellventilanordnung mit gleichem oder zumindest kompatiblem Gehäuse und anderer Ventilkonfigurationen vorgenommen werden, beispielsweise falls sich herausstellt, dass eine verwendete Stellventilanordnung bezüglich dem tatsächlich vorliegenden Prozessfluid-Strömungsverhältnis nicht optimal ausgelegt ist, wenn etwa die konstruktiv gewählten Durchflussöffnungen der Ventilsitze der Auf-/Zu-Hubventile und/oder Hub-Feinstellventile der Stellventilanordnung nicht gut auf die tatsächlich vorliegenden Strömungsverhältnisse abgestimmt sind. Eine ungünstige Abstimmung kann sich beispielsweise äußern durch unnötig hohen Energieverbrauch für das Einstellen der Stellventilanordnung, ungünstige Strömungsverhältnisse, wie Kavitation oder dergleichen, einer schlechten Regelbarkeit der Prozessfluidströmung in den relevanten zu regelnden Bereich, oder dergleichen.

Gemäß einer Ausführung einer Stellventilanordnung ist bzw. sind das wenigstens eine Hub-Feinstellventil und/oder das wenigstens eine Auf-/Zu-Hubventil druckentlastet ausgeführt. Eine druckentlastete Ausführung eines Ventils, wie eines Hub-Feinstellventils oder eines Auf-/Zu-Hubventils stellt sicher, dass unabhängig von einer Druckdifferenz zwischen eingangsseitigem Gehäusekompartiment und ausgangsseitigem Gehäusekompartiment eine präzise Einstellbarkeit des Ventilgliedes des Ventils gewährleistet ist. Vorzugsweise stellt eine druckentlastete Ausführung sicher, dass im Fall einer eventuellen Druckdifferenz zwischen eingangsseitigem Gehäusekompartiment und ausgangsseitigem Gehäusekompartiment keine resultierende Druckkraft oder nur eine sehr geringe resultierende Druckkraft (kleiner als die Hälfte der Öffnungsfläche des Ventils mal der Druckdifferenz) auf das Ventilglied wirkt. Insbesondere kann ein Hubventilglied, wie ein Stößel, des Feinstellventils (ein Hub-Feinstellventilglied) bzw. des Auf-/Zu-Hubventils (ein Auf-/Zu-Hubventilglied) einen sich in Richtung dessen Hub-Längsachse erstreckenden Durchgang aufweisen.

Bei einer Ausführung einer Stellventilanordnung mit einem Gehäuse, welches durch eine Trennwand in ein eingangsseitiges Kompartiment für Prozessfluid und ein ausgangsseitiges Kompartiment für Prozessfluid geteilt ist, ist das Hubventilglied des Feinstellventils bzw. des Auf-/Zu-Hubventils in einem dieser beiden Kompartimente angeordnet. Beispielsweise kann das Ventilglied in einem ausgangsseitigen bzw. stromabwärtigen Kompartiment des Gehäuses der Stellventilanordnung untergebracht sein. Der Durchgang bzw. die Druckentlastungsbohrung des Hubventilgliedes kann dann gemäß einer bevorzugten Ausführung gegenüber dem anderen Kompartiment geöffnet sein (gegenüber dem Kompartiment, in welchem sich das Hubventilglied nicht befindet). Der Durchgang bzw. die Druckentlastungsbohrung in dem Hubventilglied weist vorzugsweise eine lichte Weite, beispielsweise einen Durchmesser, auf, welcher nur geringfügig, vorzugsweise weniger als 20%, insbesondere weniger als 10%, kleiner ist als die lichte Weite, insbesondere der Durchmesser, der Durchflussöffnung des jeweiligen Ventils, also des dem Ventilglied zugeordneten Feinstellventils bzw. Auf-/Zu-Hubventils. Der Durchgang bzw. die Druckentlastungsöffnung kann sich, vorzugsweise parallel, insbesondere koaxial, zu der Hub-Längsachse des Ventils, also des Hub-Feinstellventils bzw. des Auf-/Zu-Hubventils, erstrecken. Durch die Druckentlastungsbohrung bzw. den Durchgang kann sichergestellt sein, dass in Richtung der Hub-Längsachse des Ventils eine möglichst geringer Druckdifferenz zwischen einem eingangsseitigen Kompartiment und einem ausgangsseitigen Kompartiment wirkt, damit keine oder eine kleine resultierende Druckkraft auf das Hubventilglied wirkt. Auf diese Weise lässt sich die Stellpräzision des Ventils verbessern und die Energieeffizienz des Feinstellantriebs oder des gewählten Stellaktors.

Gemäß einer Ausführung einer Stellventilanordnung ist die Feinstellventil-Durchflussfläche, insbesondere die Öffnungsweite und/oder der Öffnungsquerschnitt, des wenigstens einen Hub-Feinstellventils wenigstens genau so groß wie, vorzugsweise größer als, die Hubventil-Durchflussfläche, insbesondere der Öffnungsquerschnitt und/oder die Öffnungsweite, des wenigstens einen Auf-/Zu-Hubventils. Bei einer Ausführung einer Stellventilanordnung mit mehreren Auf-/Zu-Hubventilen kann es bevorzugt sein, dass diese jeweils dieselbe oder im Wesentlichen dieselbe Durchflussfläche aufweisen. Es kann bevorzugt sein, dass bei einer Stellventilanordnung mit mehreren Auf-/Zu-Hubventilen unterschiedliche Auf-/Zu-Hubventile unterschiedliche Hubventil-Durchflussflächen aufweisen. Bei der letztgenannten Ausführung kann es bevorzugt sein, dass wenigstens ein Hub-Feinstellventil eine Feinstellventil-Durchflussfläche aufweist, die wenigstens genauso groß ist, wie die größte Hubventil-Durchflussfläche. Auf diese Weise kann eine hochpräzise Einstellbarkeit in jeder beliebigen kumulierten Gesamt-Durchflussfläche der gesamten Stellventilanordnung gewährleistet sein.

Gemäß einer Ausführung einer Stellventilanordnung umfasst die Stellventilanordnung wenigstens zwei Auf-/Zu-Hubventile mit unterschiedlichen Hubventil-Durchflussflächen. Die Größe der größeren von zwei unterschiedlichen Hubventil-Durchflussflächen kann ein ganzzahliges Vielfaches der kleineren Hubventil-Durchflussfläche, insbesondere einer kleinsten Hubventil-Durchflussfläche der Stellventilanordnung sein.

Gemäß einer Ausführung einer Stellventilanordnung kann der vorzugsweise analoge Feinstellantrieb des wenigstens einen Hub-Feinstellventils und/oder der digitale Stellaktor des wenigstens einen Auf-/Zu-Hubventils stromfrei schließend ausgestaltet sein. Alternativ kann der Feinstellantrieb des wenigstens einen Feinstellventils und/oder der digitale Stellaktor des wenigstens einen Auf-/Zu-Hubventils stromfrei öffnend ausgestaltet sein. Der Feinstellantrieb und/oder der digitale Stellaktor kann insbesondere mit Federrückstellung ausgestaltet sein. Vorzugsweise sind sämtliche Ventile einer Stellventilanordnung gleichartig also entweder stromfrei schließend oder stromfrei öffnend ausgestaltet. Vorzugsweise weist jedes Hub-Feinstellventil und/oder jedes Auf-/Zu-Hubventil eine Rückstellfeder auf.

Bei einer Ausführung einer Stellventilanordnung kann der Feinstellantrieb des wenigstens einen Hub-Feinstellventils abhängig von einem Stellstrom oder abhängig von einer Stellspannung, einem Stellglied, wie einem Ventilstößel, des Hub-Feinstellventils eine vorbestimmte Stellkraft bereitstellen und/oder das Stellglied, wie den Ventilstößel, in eine vorbestimmte Stellposition bringen. Der insbesondere analoge Feinstellantrieb kann insbesondere einen Proportional-Hubmagneten umfassen.

Gemäß einer Ausführung einer Stellventilanordnung umfasst der Stellaktor des wenigstens einen Auf-/Zu-Hubventils einen elektrischen Schalt-Aktor, wie ein elektromagnetischer Hubmagnet, ein Piezoelement oder dergleichen. Der elektrische Schalt-Aktor kann bistabil sein. Der elektrische Schalt-Aktor definiert wenigstens eine, insbesondere zwei, stabile Stellung, die vorzugsweise mit der Öffnungsstellung und/oder der Schließstellung des Auf-/Zu-Hubventils korrespondiert. Insbesondere kann ein zum Wechseln zwischen den zwei vorzugsweise stabilen Stellungen erforderlicher Betätigungsstrom größer sein als ein zum Halten der ersten oder der zweiten Stellung erforderlicher Haltestrom. Alternativ oder zusätzlich kann insbesondere eine zum Wechseln zwischen den zwei stabilen Stellungen erforderliche Betätigungsspannung größer sein als eine zum Halten der ersten oder der zweiten Stellung erforderliche Haltespannung. Beispielsweise kann ein Schaltstrom bzw. Betätigungsstrom insbesondere impulsartig (für 5ms bis 100ms, beispielsweise 10ms) in einer Höhe zwischen 5 A und 20 A, beispielsweise 8 A, angelegt werden. Ein Haltestrom kann beispielsweise eine Höhe zwischen 0,5 A und 2 A haben, beispielsweise 0,8 A. Vorzugsweise ist Betätigungsstrom wenigstens 5 mal, wenigstens 10 mal oder wenigstens 20 mal größer als der Haltestrom. Zur Bereitstellung des vorzugsweise impulsartigen Betätigungsstroms kann die Steuerungselektronik einen Kondensator umfassen. Der Unterschied zwischen erforderlicher Halteenergie (abhängig von dem Haltestrom und/oder der Haltespannung) und erforderlicher Betätigungsenergie (abhängig vom Betätigungsstrom und/oder Betätigungsspannung) kann wenigstens der Faktor 2, der Faktor 5, der Faktor 10 sein, der Faktor 20 oder der Faktor 50 sein.

Bei der Stellventilanordnung umfasst das wenigstens eine Auf-/Zu-Hubventil eine Dämpfungskinematik, wie ein pneumatischer oder hydraulischer Dämpfer, zum Dämpfen der Hubbewegung. Die Dämpfungskinematik bewirkt, dass die Bewegung des Hubventilglieds des Auf-/Zu-Hubventils für eine Bewegung aus der Öffnungsstellung in die Schließstellung oder aus der Schließstellung in die Öffnungsstellung (nicht schlag- bzw. impuls-artig sondern) insbesondere degressiv verläuft und/oder die Veränderung von der Schließstellung zu der Öffnungsstellung oder von der Öffnungsstellung zu der Schließstellung relativ zu dem Umschalten des diskreten Stellaktors mit einer Zeitverzögerung von wenigstens einer 100stel Sekunde, vorzugsweise wenigstens einem 10tel Sekunde erfolgt.

Gemäß einer Ausführung einer Stellventilanordnung sind das wenigstens eine Hub-Feinstellventil und das wenigstens eine Auf-/Zu-Hubventil (vorzugsweise sämtliche Ventile der Stellventilanordnung), insbesondere mittels einer Steuerelektronik der Stellventilanordnung für eine im Wesentlichen glatte und/oder stufenfreie Gesamt-Durchflusskennlinie der Stellventilanordnung aufeinander abgestimmt. Eine solche beispielsweise mit Hilfe einer gemeinsamen Steuerungselektronik bewirkte Abstimmung der Ventile der Stellventilanordnung aufeinander bewirkt, dass die Gesamt-Durchflusskennlinie des Stellventils, welche den Verlauf deren Prozessfluid-Volumenströmung durch die Stellventilanordnung von einem vollständig geschlossenen Zustand der Stellventilanordnung bis zu einem vollständig geöffneten Zustand der Stellventilanordnung bewirken kann, einen streng monoton steigenden Verlauf aufweist.

Die erfindungsgemäße Stellventilanordnung kann insbesondere zur Ausführung des nachfolgend beschriebenen Verfahrens ausgestaltet sein. Mit der erfindungsgemäßen Stellventilanordnung kann insbesondere das nachfolgend beschriebene Verfahren durchgeführt werden.

Die Erfindung betrifft auch ein Verfahren zum Betätigen einer insbesondere wie oben beschrieben ausgeführten Stellventilanordnung zum Einstellen einer Prozessfluidströmung einer prozesstechnischen Anlage, wie einem Kraftwerk, einer chemischen Anlage, einer Lebensmittel verarbeitenden Anlage oder dergleichen. Die Stellventilanordnung umfasst parallelgeschaltet wenigstens ein Hub-Feinstellventil mit einer analogen Durchflusskennlinie und wenigstens ein Auf-/Zu-Hubventil mit einer digitalen Durchflusskennlinie. Bei einem Hub-Feinstellventil mit einer analogen Durchflusskennlinie ist jedem Steuereingangswert, beispielsweise jedem Steuerstrom oder jeder Steuerspannung, in einem Bereich, beispielsweise zwischen 0..20 mA oder 4..20 mA, ein spezifischer Durchflusswert vorzugsweise individuell zugeordnet. Eine digitale Durchflusskennlinie eines Auf-/Zu-Hubventils ordnet jedem Steuersignal, beispielsweise jeder Steuerspannung oder jedem Steuerstrom, insbesondere Steuerströmen zwischen 0..20 mA oder 4..20 mA, entweder eine Schließstellung oder eine Öffnungsstellung des Auf-/Zu-Hubventils zu, wobei vorzugsweise ab einem Schwellenwert, beispielsweise 4 mA, 10 mA oder 12 mA, eine Umschaltung zwischen einer Schließstellung (insbesondere bei einem Steuersignal unterhalb des Schwellenwertes) und einer Öffnungsstellung (insbesondere bei einem Steuersignal oberhalb des Schwellenwerts) erfolgen kann.

Bei dem Verfahren zum Betätigen einer Stellventilanordnung ist die Ansteuerung des wenigstens einen Hub-Feinstellventils und des wenigstens einen Auf-/Zu-Hubventils derart aufeinander abgestimmt, dass die Stellventilanordnung eine im Wesentlichen glatte und/oder stufenfreie analoge Gesamt-Durchflusskennlinie hat. Die Abstimmung der Ansteuerung des wenigstens einen Hub-Feinstellventils und des wenigstens einen Auf-/Zu-Hubventils kann beispielsweise durch eine Steuerelektronik, beispielsweise eine analoge Steuerungselektronik und/oder eine digitale Steuerungselektronik, insbesondere einen Mikroprozessor und/oder einen Mikrokontroller, realisiert sein.

Die abgestimmte Ansteuerung des Hub-Feinstellventils und des Auf-/Zu-Hubventils (oder mehrerer Ventile) kann beispielsweise derart gestaltet sein, dass in einem ersten Stellbereich (von beispielsweise 0% bis 50% Gesamtdurchfluss) eine Ansteuerung ausschließlich des Hub-Feinstellventils erfolgt, welche den Durchfluss in diesem Bereich einstellt. In einem zweiten Stellbereich (von beispielsweise 51% bis 100%) kann die Ansteuerung der Stellventilanordnung derart erfolgen, dass simultan das Hub-Feinstellventil in eine geschlossene Stellung (zurück) verfahren wird und das Auf-/Zu-Hubventil von der vollständig geschlossenen in die vollständig geöffnete Stellung verfahren wird. In diesem Steuerungsbereich kann anschließend, beispielsweise in dem Stellbereich 51% bis 100%, das Auf-/Zu-Hubventil in der geöffneten Stellung verbleiben und das Hub-Feinstellventil eine zusätzliche Durchflussfläche zum Bezwecken der kumulierten Gesamt-Durchflussfläche der Stellventilanordnung bereitstellen. Durch ein solches Verfahren kann ein besonders kostengünstiges Ventil, welches sowohl in der Anschaffung als auch im Unterhalt wie auch im Energieverbrauch kostengünstig ist, mit hoher Präzision betätigt werden.

Gemäß einer Ausführung eines Verfahrens kann die Ansteuerung des wenigstens einen Hub-Feinstellventils ein kontinuierliches Öffnen des Hub-Feinstellventils ausgehend von einer geschlossenen Feinstellventil-Durchflussfläche (entsprechend einer Schließstellung des Auf-/Zu-Hubventils) zu einer geweiteten Feinstellventil-Durchflussfläche beispielsweise entsprechend einer Öffnungsstellung eines bestimmten der Auf-/Zu-Hubventils umfassen. Für ein solches Verfahren ist es zweckmäßig, dass die maximal mögliche Hub-Feinstellung die Durchflussfläche wenigstens genauso groß ist, wie die Auf-/Zu-Hubventil-Durchflussfläche. Alternativ können mehrere parallel geschaltete Hub-Feinstellventile kleinerer Durchflussflächen verwendet werden. Falls das mit dem erfindungsgemäßen Verfahren betätigte Stellventilanordnung nur ein Hub-Feinstellventil und mehrere Auf-/Zu-Hubventile aufweist, kann es zweckmäßig sein, dass die maximal mögliche Hub-Feinstellventil-Durchflussfläche wenigstens genauso groß ist, wie die größte Hubventil-Durchflussfläche eines der Auf-/Zu-Hubventile.

Eine Weiterbildung des Verfahrens umfasst einen Schaltschritt, während dem das Auf-/Zu-Hubventil insbesondere auch sprungartig aus der Schließstellung in die Öffnungsstellung verbracht wird und während dem die Feinstellventil-Durchflussfläche des Hub-Feinstellventils, insbesondere schnell und/oder sprungartig, von der Feinstellventil-Durchflussfläche zu der geschlossenen Feinstellventil-Durchflussfläche wechselt. Ein derartiger Schaltschritt kann bei dem Verfahren vorgesehen sein, um in einem Übergangsbereich, bei dem zum Erhöhen der kumulierten Gesamt-Durchflussfläche der Stellventilanordnung das Öffnen eines Auf-/Zu-Hubventils erforderlich ist, ein möglichst glatter und/oder kontinuierlicher Übergang der Gesamt-Durchflusskennlinie zu realisieren.

Gemäß einer Ausführung eines Verfahrens zum Betätigen einer Stellventilanordnung kann die Umschaltung des Auf-/Zu-Hubventils zwischen der Schließstellung und der Öffnungsstellung unter Einfluss einer Dämpfung, insbesondere einer PT1-Dämpfung, wie eines pneumatischen oder hydraulischen Dämpfers, erfolgen. Die Umschaltung, beispielsweise ein Schaltschritt, kann durch Verwendung einer Dämpfung mit einem geglätteten Verlauf, vorzugsweise ohne Sprung und/oder ohne Überschwingung realisiert sein.

Gemäß einer alternativen Ausführung eines Verfahrens zum Betätigen einer Stellventilanordnung kann die Umschaltung, insbesondere ein Schaltschritt, des Auf-/Zu-Hubventils zwischen der Schließstellung und der Öffnungsstellung eine phasenweise pulsweitenmodulierte Betätigung des Auf-/Zu-Hubventils umfassen. Vorzugsweise kann während der Umschaltung bzw. der Umschaltphase des Auf-/Zu-Hubventils zwischen dessen Schließstellung und dessen Öffnungsstellung für die vorzugsweise vorbestimmte Dauer der Umschaltphase das Auf-/Zu-Hubventils derart pulsweitenmoduliert angesteuert werden, dass das Auf-/Zu-Hubventil innerhalb der Umschaltphase zahlreiche Stellungswechsel zwischen der Schließstellung und der Öffnungsstellung vollführt, wobei sich schrittweise die Dauer der aufeinanderfolgenden Schließstellungs-Intervalle und Öffnungsstellungs-Intervalle ändert. Beispielsweise können beim Umschalten aus der Schließstellung in die Öffnungsstellung zunächst relativ kurze Öffnungsstellungs-Intervalle mit relativ langen Schließstellungs-Intervallen abwechseln, und während des Verlaufs der Umschaltphase die Dauer der Öffnungsstellungs-Intervalle wachsen und die Dauer der Schließstellungs-Intervalle sinken. Für die Umschaltung zwischen einer Öffnungsstellung und einer Schließstellung kann die phasenweise pulsweitenmodulierte Betätigung des Auf-/Zu-Hubventils umgekehrt erfolgen, d.h. anfangs relativ lange Öffnungsstellungs-Intervalle schrumpfen und anfangs relativ große Schließstellungs-Intervalle wachsen nach und nach. Die phasenweise pulsweitenmodulierte Betätigung des Auf-/Zu-Hubventils (Umschaltphase) kann eine vorbestimmte Anzahl von Intervallen bzw. Pulsen umfassen, beispielsweise zwischen 10 und 1000, insbesondere zwischen 20 und 200, vorzugsweise zwischen 50 und 100 Intervalle.

Weitere Eigenschaften, Merkmale und Vorteile der Erfindung werden durch die folgende Beschreibung bevorzugter Ausführungen der Erfindung anhand der beiliegenden Zeichnungen deutlich, in denen zeigen:
- Fig. 1: eine schematische Schnittansicht einer erfindungsgemäßen Stellventilanordnung gemäß einer ersten Ausführung;
- Fig. 2a: eine schematische Teilschnittansicht eines Auf-/Zu-Hubventils einer erfindungsgemäßen Stellventilanordnung gemäß einer zweiten Ausführung in dessen Schließstellung;
- Fig. 2b: das Auf-/Zu-Hubventil gemäß Fig. 2a in dessen Öffnungsstellung;
- Fig. 3a: eine schematische Teilschnittansicht eines Auf-/Zu-Hubventils einer erfindungsgemäßen Stellventilanordnung gemäß einer dritten Ausführung in dessen Schließstellung;
- Fig. 3b: das Auf-/Zu-Hubventil gemäß Fig. 3a in dessen Öffnungsstellung;
- Fig. 4a: eine schematische Teilschnittansicht eines Auf-/Zu-Hubventils einer erfindungsgemäßen Stellventilanordnung gemäß einer weiteren Ausführung in dessen Schließstellung;
- Fig. 4b: das Auf-/Zu-Hubventil gemäß Fig. 4a in dessen Öffnungsstellung;
- Fig. 5a - e: Kennlinien in einer ersten erfindungsgemäßen Stellventilanordnung; und
- Fig. 6a - g: Kennlinien in einer zweiten erfindungsgemäßen Stellventilanordnung.

Eine erfindungsgemäße Stellventilanordnung ist im Allgemeinen mit dem Bezugszeichen 1 oder 2 versehen. Als Hauptbestandteile umfasst die erfindungsgemäße Stellventilanordnung eine Ventilanordnungsgehäuse 11, das exemplarisch wie abgebildet die Form eines Rohrabschnittes haben kann, sowie wenigstens zwei bezüglich des Prozessfluides parallel zueinander geschaltete Hubventile, wobei wenigstens ein Auf-/Zu-Hubventil 5 und wenigstens ein Hub-Feinstellventil 3 vorgesehen ist.

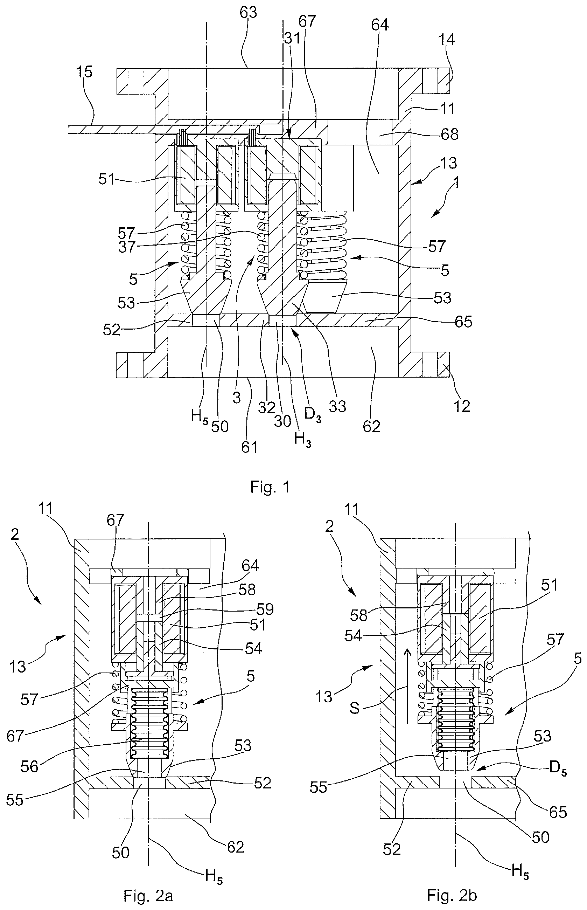

Das Gehäuse 11, welches das Prozessfluid von einem Eingang 61 zu einem Ausgang 63 führt, ist durch eine Trennwand 65 (in einem vollständig geschlossenen Zustand der Stellventilanordnung 1, wie in Fig. 1 dargestellt) unterteilt in ein eingangsseitiges, stromaufwärtiges Prozessfluid führendes Kompartiment 62 und ein ausgangsseitiges, stromabwärtiges Prozessfluid führendes Kompartiment 64. Die Parallelschaltung der Ventile ist bei der in der Fig. 1 exemplarisch dargestellten Ausführung einer erfindungsgemäßen Stellventilanordnung 1 dadurch realisiert, dass in dem Gehäuse 11 die Trennwand 65 mit Durchflussöffnungen 30, 50 versehen ist, die in dem in Fig. 1 abgebildeten geschlossenen Zustand der Stellventilanordnung verschlossen sind durch die Stößel 33, 53, welche in dem geschlossenen Zustand der Stellventilanordnung im Eingriff mit dem jeweils zugeordneten Ventilsitz 32 bzw. 52 stehen.

Die in Fig. 1 abgebildete Stellventilanordnung 1 umfasst ein Hub-Feinstellventil 3, das zentral in dem Gehäuse 11 angeordnet ist. Das Gehäuse 11 kann beispielweise eine Zylinderhülsenform haben. Rund um das mittige Hub-Feinstellventil 3 können weitere Ventile, in Fig. 1 beispielsweise zwei oder drei Auf-/Zu-Hubventile 5 angeordnet sein.

Das Gehäuse 11 der Stellventilanordnung 1 ist mit einer Haltestruktur 67 in Form einer Haltescheibe- oder -brücke ausgestattet, an der die einzelnen Hub-Feinstellventile 3 und Auf-/Zu-Hubventile 5 befestigt sind. Die Haltestruktur 67 ist mit wenigstens einer Öffnung 68 für das Prozessfluid ausgestattet. Innerhalb der Stützstruktur 67 kann zumindest ein Teil der Steuerelektronik 15 der Stellventilanordnung 1 untergebracht sein. Die Steuerelektronik 15 der Stellventilanordnung 1 kann durch die Stützstruktur 67 auf den diskreten Stellaktor 51 eines Auf-/Zu-Hubventils 5 und auf den Feinstellantrieb 31 eines Hub-Feinstellventils 3 zugreifen. Die Steuerelektronik 15 kann zu dem diskreten Stellaktor 51 bzw. dem Feinstellantrieb 31 hinführende Kabel und Steuerungs- und/oder Änderungs-Elemente, wie einen Mikroprozessor, einen Mikrokontroller oder dergleichen umfassen.

Eine Auf-/Zu-Hubventil 5 der Stellventilanordnung 1 setzt sich zusammen aus einem entlang einer Hub-Längsachse H₅ beweglichen Ventilglied in Form eines Stößels 53, einen Ventilsitz 52, der mit dem Stößel 53 kooperiert und eine Durchflussöffnung 50 definiert, die abhängig von der Stellung des Stößels 53 verschlossen oder freigegeben ist, und einem diskreten Stellaktor 51 zum Betätigen des Stößels 53. In der in den Figuren dargestellten bevorzugten Ausführung ist das Auf-/Zu-Hubventil 5 ferner mit einer Rückstellfeder 57 ausgestattet, die in Fig. 1 derart ausgelegt ist, dass sie den Stößel 53 in seiner Schließstellung drängt.

Der diskrete Stellaktor 51 des Auf-/Zu-Hubventils 5 kann ein Hubmagnet-Aktor, insbesondere ein schaltender Hubmagnet sein. Ein schaltender Hubmagnet benötigt zum Umschalten aus einer ersten Stellung (z.B. eine Schließstellung) ein eine zweite Stellung (z.B. eine Öffnungsstellung) lediglich einen kurzen Schaltstromimpuls. Zum Halten der zweiten Stellung kann ein wesentlich geringerer Haltestrom ausreichen. Ein schaltender Hubmagnet ist vorzugsweise dergestalt ausgelegt, dass in wenigstens einer seiner beiden diskreten Schaltstellungen, beispielsweise einer Schließstellung und/oder einer Öffnungsstellung, nur ein geringfügiger Magnetluftspalt vorhanden ist. In der anderen diskreten Schaltstellung, beispielsweise der Öffnungsstellung oder der Schließstellung, kann ein wesentlich größerer Magnetluftspalt vorhanden sein. Vorzugsweise kann der schaltende Hubmagnet mit einem Rückstellmittel, wie einer Rückstellfeder, kooperieren, das Ventil, insbesondere bei stromlosem schaltenden Hubmagnet, in die andere diskrete Schaltstellung drängt. Ein schaltender Hubmagnet ist vorzugsweise dergestalt ausgelegt, dass in wenigstens einem von dessen Zuständen, also wenn sich der Hubmagnet entweder in dessen Schließstellung oder in dessen Öffnungsstellung befindet, nur ein geringer Haltestrom erforderlich ist, um diese Stellung zu halten, insbesondere ein um die Faktor 5 oder Faktor 10 geringerer Haltestrom als der zum Auslösen des Schaltvorgangs erforderlicher Stromimpuls.

Durch eine Parallelschaltung um mehrere Auf-/Zu-Hubventile 5, in Fig. 1 sind es beispielsweise 3 (nur zwei sichtbar) lässt sich ein Prozessfluid-Grunddurchfluss einstellen, welcher sich durch die Summe der Durchflüsse durch die Durchflussfläche(n) D₅ parallel geschalteten geöffneten Auf-/Zu-Hubventil 5 bestimmt. Bei der Ausführung einer Stellventilanordnung 1 gemäß Fig. 1 kann ein Grund-Durchflusswert in drei Stufen wählbar eingestellt werden, beispielsweise durch das Öffnen nur eines der Auf-/Zu-Hubventile 5, durch das Öffnen von zwei der Auf-/Zu-Hubventile 5 oder durch das Öffnen von allen drei Auf-/Zu-Hubventilen 5. Die einzelnen Durchflussflächen D₅ der mehreren Auf-/Zu-Hubventile 5 können einen vorgegebenen Anteil des theoretisch möglichen Gesamtdurchflusses des Prozessfluids durch die Stellventilanordnung 1 freigeben oder verschließen. Bei der in Fig. 1 dargestellten Stellventilanordnung mit drei Auf-/Zu-Hubventilen 5 und einem vierten Ventil, das nicht als Auf-/Zu-Hubventil sondern als Hub-Feinstellventil 3 gestaltet ist, kann beispielsweise jedes der Auf-/Zu-Hubventile eine individuelle Durchflussfläche D₅ definieren, welche etwa 25% der theoretisch möglichen kumulierten Gesamt-Durchflussfläche der Stellventilanordnung 1 realisiert. Die drei obengenannten Grund-Durchflussstufen würden dementsprechend einer kumulierten Gesamt-Durchflussfläche von 25%, 50%, oder 75% der theoretisch möglichen Gesamt-Durchflussfläche der Stellventilanordnung 1 entsprechen.

Es ist denkbar, dass die unterschiedlichen Ventile, insbesondere die unterschiedlichen Auf-/Zu-Hubventile 5 der Stellventilanordnung 1 unterschiedlich große individuelle Durchflussflächen D₅ haben können. Beispielsweise können die Durchflussflächen D₅ der Auf-/Zu-Ventile 5 10%, 20% oder 35% der theoretischen Gesamt-Durchflussfläche der Stellventilanordnung 1 ausmachen. Bei einer solchen Ausgestaltung sind noch weitere Grund-Durchflussstufen-Einstellungen realisierbar, die sich anhand der Kombinatorik der Öffnungsflächen der Auf-/Zu-Hubventile 5 ergeben.

Es sei klar, dass die Anzahl von Auf-/Zu-Hubventile 5 einer Stellventilanordnung 1 grundsätzlich nicht auf die abgebildeten Anzahl zwei bis drei beschränkt ist, sondern dass eine Stellventilanordnung zahlreiche parallel geschaltete Auf-/Zu-Hubventile 5 und wenigstens ein parallel geschaltetes Feinstellventil 3 umfassen kann.

Das Feinstellventil 3 umfasst einen entlang einer Hub-Längsachse H₃ beweglichen Stößel 33, der mit einer Rückstellfeder 37 ausgestaltet sein kann, einen Ventilsitz 32, welcher mit dem Stößel 33 korrespondiert, so dass eine von dem Ventilsitz 32 definierte Durchflussöffnung 30 abhängig von der Stellung des Stößels 33 mehr oder weniger freigegeben bzw. geschlossen werden kann, und einen Feinstellantrieb 31 zum Betätigen des Stößels 33. Der Feinstellantrieb 31 ist möglichst stetig ansteuerbar. Beispielsweise kann der Feinstellantrieb 31 als Proportional-Hubmagnet realisiert sein. Der Feinstellantrieb 31 kann den dazu gehörigen Aktorstößel 33 in unterschiedlichen, beliebig wählbaren Stellungen zwischen einer geschlossenen Stellung, in welcher der Stößel 33 abdichtend mit dem Ventilsitz 32 kooperiert und die Durchflussöffnung 30 schließt, und unterschiedlichen Öffnungsstellungen, in denen der Feinstellantrieb 31 je eine bestimmte Relativstellung des Stößels 33 relativ zu dem Ventilsitz 32 einstellt, um einen entsprechenden bestimmten Strömungswiderstand bei geöffneter Durchflussfläche D₃ bereitzustellen. Das Hub-Feinstellventil 3 kann beispielsweise dazu ausgelegt sein, um als Regelglied zum Erreichen einer Soll-Druckdifferenz zwischen dem stromaufwärtigen Kompartiment 62 und dem stromabwärtigen Kompartiment 64 zu realisieren. Das Hub-Feinstellventil 3 kann dazu ausgelegt sein, eine bestimmte Prozessfluid-Volumenströmung von dem stromaufwärtigen Kompartiment 62 in das stromabwärtigen Kompartiment 64 der Stellventilanordnung 1 zuzulassen.

Im Unterscheid zu dem Auf-/Zu-Hubventil 5 der Stellventilanordnung 1, welches ausschließlich eine vollständig geschlossene Stellung oder eine vollständig geöffnete Stellung einnehmen kann, ist es dem Hub-Feinstellventil 3 möglich, zusätzlich zu einer vollständig geschlossenen Stellung und einer weitest möglich geöffneten Stellung wenigstens eine, wenigstens drei, wenigstens fünf, wenigstens elf oder mehr, vorzugsweise kontinuierliche, Zwischenstellungen einzunehmen.

Der Durchfluss des vorzugsweise stetig bzw. kontinuierlich steuerbaren Hub-Feinstellventils 3 kann zu dem Grunddurchfluss zwischen den eventuell geöffneten Auf-/Zu-Hubventile 5 bereitgestellten Grunddurchfluss hinzuaddiert werden und ergibt so den kumulierten Gesamt-Durchfluss der Stellventilanordnung 1. Die Durchflussfläche D₃ des Feinstellventils 3 kann beispielsweise derart ausgelegt sein, dass sie wenigstens genauso groß ist wie die Durchflussfläche D₅ der Auf-/Zu-Hubventile. Falls mehrere Auf-/Zu-Hubventile 5 mit unterschiedlichen Durchflussflächen D₅ vorgesehen sind, kann es bevorzugt sein, dass die Durchflussfläche D₅ des Feinstellventils 3 wenigstens genauso groß ist wie die größte Durchflussfläche D₅ der mehreren Auf-/Zu-Hubventile 5.

Es ist alternativ auch denkbar, dass bei einer Stellventilanordnung 1 mit mehreren Auf-/Zu-Hubventilen 5 mit unterschiedlichen Durchflussflächen D₅ die Durchflussfläche D₃ des Hub-Feinstellventils 3 wenigstens so groß ist wie die kleinste Durchflussfläche D₅ der Auf-/Zu-Hubventile 5. Beispielsweise falls die Größen unterschiedlicher Durchfläche D₅ der Auf-/Zu-Hubventile 5 nach Art einer z. B. Binaärsystem-Reihe zueinander im Verhältnis stehen, damit die größte Durchflussfläche D₅ sowie jede andere Durchflussfläche D₅ der Auf-/Zu-Hubventile 5 als kumulierte Durchflussfläche des Hub-Feinstellventils 3 (D₃) mit wenigstens einem kleinen der Auf-/Zu-Hubventile 5 realisierbar ist.

Bei der in Fig. 1 dargestellten Ausführung sind der Feinstellantrieb 31 und die diskreten Stellaktoren 51 derart ausgelegt, dass sie abhängig von der Bestromung bzw. abhängig von der Versorgung mit einer Versorgungsspannung das jeweilige Ventil öffnen können. Die Ventile sind mit je einer Rückstellfeder 37 bzw. 57 ausgestattet, welche den jeweiligen Stößel 33 bzw. 53 in Eingriff mit dem Ventilsitz 32 bzw. 52 drängen. Diese Konfiguration kann als stromfrei schließend ("power to open") bezeichnet sein. Sie eignet sich beispielsweise für solche Anwendungen, bei denen bei einem Stromausfall das Einnehmen eines sicheren, geschlossenen Zustands der Stellventilanordnung 1 erforderlich ist.

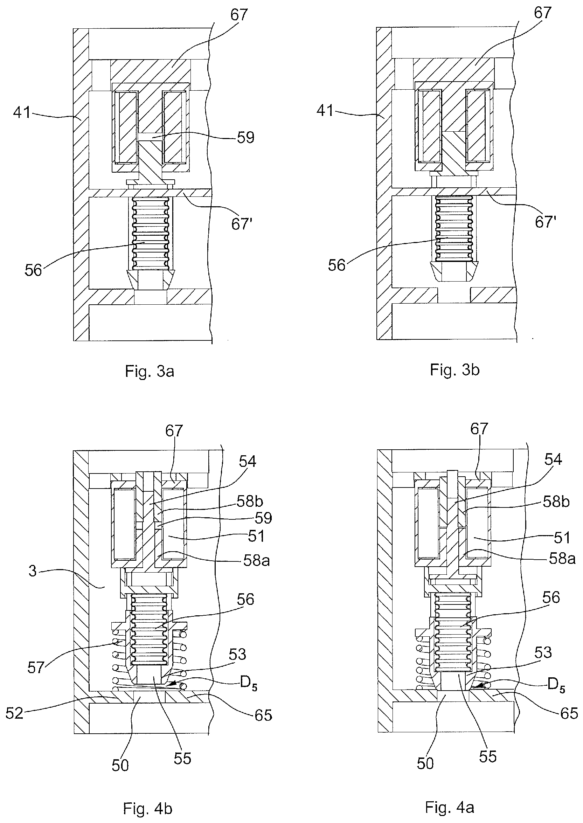

Die Fig. 2a und 2b zeigen eine Schließstellung (Fig. 2a) bzw. eine Öffnungsstellung (Fig. 2b) einer weiteren Ausführung eines Auf-/Zu-Hubventils 5. Von der zuvor bezüglich Fig. 1 beschriebenen Ausführung unterscheidet sich die Ausführung gemäß den Fig. 2a und 2b dadurch, dass koaxial zu der Hub-Längsachse H₅ im Inneren des Stößels 53 ein Durchgang 55 sowie eine Druckausgleichsöffnung vorgesehen sind. Ähnliche Ventilausführungen zeigen auch die Fig. 3a und 3b, sowie Fig. 4a und 4b, auf die im Folgenden noch genauer Bezug genommen wird.

Die Ausführung gemäß den Fig. 2a und 2b entspricht der in Fig. 1 dargestellten Auslegung zu der "stromfrei schließend" (power to open). Eine Rückstellfeder 57 drängt den ausgewählten Stößel 30 in die in Fig. 2 dargestellte Schließstellung. Der als Hubmagnet realisierte diskrete Stellaktuator 51 umfasst einen relativ zu dem Gehäuse 11 bzw. der Stützstruktur 57 ortsfesten Magnetkern 58. Der im Inneren des Hubmagneten 51 bewegliche Schaftabschnitt 54 des Stößels 53 ist zumindest teilweise ferromagnetisch. In der Schließstellung gemäß Fig. 2a ist zwischen dem Magnetkern 58 und dem Schaftabschnitt 54 der größtmögliche Luftspalt 59 ausgebildet. In Fig. 2b ist eine geöffnete Stellung gezeigt, in welcher der Stößel 53 von dem Ventilsitz 52 entfernt ist. Zu diesem Zweck ist der Schaftabschnitt 54 durch den Hubmagneten 51 an den Magnetkern 58 herangezogen wurden. Ein Spalt 59 ist nicht mehr bzw. nahezu nicht mehr vorhanden. In dem geöffneten Zustand des Auf-/Zu-Hubventils 5 kann Prozessfluid entlang der Strömungsrichtung S durch das Gehäuse 11 fließen.

Der Kolben 53 und der diskrete Stellaktor 51 befinden sich in dem stromabwärtigen Kompartiment 64 des Gehäuses, in Strömungsrichtung S also hinter der Trennwand 65.

In dem geschlossenen Zustand gemäß Fig. 2a ist der Durchgang 55 in dem Stößel 53 in Richtung des stromaufwärtigen Kompartiments 52 geöffnet. Relativ zu dem stromabwärtigen Kompartiment 64 ist der Durchgang 55 abdichtend verschlossen. Zu diesem Zweck kann der Durchgang 55 mit einer Federbalgdichtung 56 ausgestaltet sein. Die Federbalgdichtung 56 kann sich in Richtung der Hub-Längsachse H₃ einerseits an einem Vorsprung im Inneren der Hülse 53 und andererseits an dem Gehäuse 11 bzw. der Stützstruktur 67 abstützen.

Die lichte Weite des Durchgangs 55 ist größer als die Hälfte, insbesondere größer als 75%, vorzugsweise größer als 80%, besonders bevorzugt größer als 90%, der lichten Weite der Durchflussöffnung 50 des Auf-/Zu-Hubventils 5 durch die Trennwand 65. Der Durchgang 55 reduziert die effektive Querschnittsfläche des Stößels 53, auf welche die Druckdifferenz zwischen stromaufwärtigem Kompartiment 62 und stromabwärtigem Kompartiment 64 wirkt, so dass eine Druckkraft-Resultierende bei einem Stößel ohne Durchgang (wie in Fig. 1 dargestellt) wesentlich größer ist als die Druckkraft-Resultierende des mit dem Durchgang 55 ausgestatteten Stößels 53 gemäß Fig. 2a und 2b. Da die Druckkraft-Resultierende einer effektiven Wirkfläche des Stößels 53 durch den diskreten Stellaktor 51 überwunden werden muss, ist bei in der Fig. 2a und 2b ausgelegten Ausführung eine wesentlich geringere Stellkraft erforderlich als bei der Ausführung gemäß Fig. 1.

Es sei klar, dass auch bei dem Hub-Feinstellventil 3 gemäß Fig. 1 eine Durchgangsöffnung in dessen Stößel 33 vorgesehen sein könnte, wie bei dem in Fig. 2a und 2b dargestellten Auf-/Zu-Hubventil (oder wie bei dem in den nachfolgenden Ausführungen).

Die in der Fig. 3a und Fig. 3b dargestellte Ausführung eines Auf-/Zu-Hubventils 5 unterscheidet sich von den oben bezüglich Fig. 2a und 2b beschriebenen Ausführungen im Wesentlichen dadurch, dass ein sich quer durch das Gehäuse 11 erstreckender sekundärer Stützabschnitt 67' zur Abstützung der Federbalgdichtung 56 vorgesehen ist anstelle des wie in Fig. 2a abgebildeten Teils des Stützabschnitts 67, welche brückenartig vor dem diskreten Stellaktor 51 vorgesehen und mit diesem verbunden ist. Ferner unterscheidet sich die Ausführungen gemäß der Fig. 3a und 3b von den Ausführungen gemäß Fig. 2a und 2b dadurch, dass sie von einer Rückstellfeder ausgebildet ist.

Die Fig. 4a und 4b zeigen eine vollständig geschlossene Stellung (Figur 4a) bzw. eine vollständig geöffnete Stellung (Fig. 4b) eines Hub-Stellaktors 5, dessen Stößel 53 mit einem sich in Richtung einer Längsachse H₅ des Auf-/Zu-Hubventils 5 erstreckenden Durchgang 55 gebildet ist. Die dargestellte Ausführung des Stößels 53 entspricht ansonsten im Wesentlichen dem der Ausführungen des Auf-/Zu-Hubventils gemäß den Fig. 2a und 2b. Allerdings hat das Auf-/Zu-Hubventil 5 gemäß der Fig. 4a und 4b die Konfiguration stromfreien Öffnen (open to close). Zu diesem Zweck erstreckt sich die Rückstellfeder 57 zwischen der Trennwand 65 des Gehäuses 11 und dem Stößel 53. Der Stößel 53 kann (wie der in Fig. 2a und 2b dargestellte Stößel 53) eine radiale Auskragung, beispielsweise einen Flansch oder mehrere radialen Nasen, aufweisen, an denen die Rückstellfeder 57 sich abstützen kann.

In Fig. 4a und 4b ist zu erkennen, dass der Hubstellaktor 51 in Richtung der Hub-Längsachse H₅ einen zweiteiligen, rohrartigen Kern hat, der sich in Richtung der Hub-Längsachse H₅ in einem vorderen Abschnitt 58a und einem hinteren Abschnitt 58b unterteilt, die in dem geöffneten Zustand durch den Spalt 59 (Ringspalt) voneinander getrennt sind. Koaxial zu dem stationären Rohrabschnitt 58a verläuft in dessen Inneren der Stößelschaft 54 des Stößels 54. Der Stößelschaft 54 ist zumindest teilweise translatorisch verlagerbar und kann abhängig von einem Steuerstrom bzw. bei einer Steuerspannung entlang der Hub-Längsachse H₅ positioniert werden. Er umfasst vorzugsweise ein nicht-ferromagnetisches Material, wie Austenit oder Aluminium, oder besteht daraus. Eine der beiden Hülsen 58a, 58b, vorzugsweise die obere Hülse 58b, ist ferromagnetisch, insbesondere zumindest teilweise aus Ferrit, und für eine gemeinsame Bewegung fest mit dem Stößelschaft 54 verbunden.

Ähnlich wie in der Ausführung gemäß Fig. 2a stützt sich eine Federbalgdichtung 36 an einem Stirnende an einem innenseitigen Vorsprung des Stößels 33 und an dessen anderer Stirnseite an einem Abschnitt an einem Teil des Stützabschnitts 67 des Gehäuses 11 ab.

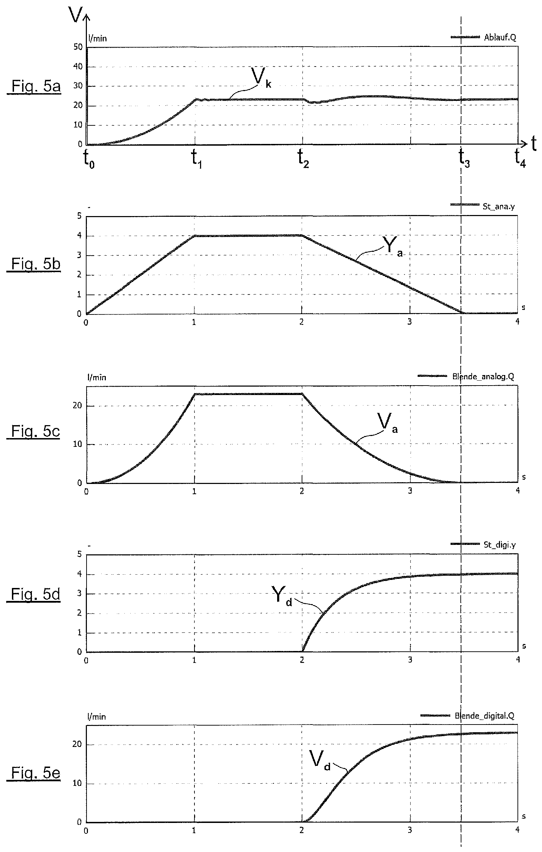

Fig. 5a zeigt exemplarisch eine Kennlinie betreffend des kumulierten Gesamt-Volumenstroms Vₖ₁ in einem zeitlichen Verlauf, während dem zunächst ein Hub-Feinstellventil einer Stellventilanordnung geöffnet und dann ein Auf-/Zu-Hubventil dieser Stellventilanordnung geöffnet wird, während gleichzeitig das zuvor geöffnete Hub-Feinstellventil wieder geschlossen wird. Die der Volumenstrom des Hub-Feinstellventils ist in Fig. 5c abgebildet. Fig. 5e zeigt den Volumenstromverlauf innerhalb desselben Zeitraumes für das Auf-/Zu-Hubventil. Fig. 5b zeigt für denselben Zeitraum eine Ansteuerkennlinie yₐ für die Betätigung des Hub-Feinstellventils für diesen Zeitraum und Fig. 5d zeigt eine Ansteuerkennlinie y_{d} für den diskreten Stellaktor des beteiligten Auf-/Zu-Hubventils.

Wie in den Fig. 5a und 5c zu erkennen ist, wird zunächst im Verlauf zwischen t=0 Sekunde und t=1 Sekunde das Feinstellventil der Stellventilanordnung kontinuierlich geöffnet, so dass sich ein entsprechender Prozessfluid-Volumenstrom Vₐ in etwa proportional zu der Öffnungsseite des Hub-Feinstellventils einstellt. Im zeitlichen Verlauf zwischen Sekunde 1 und Sekunde 2 verbleibt das Hub-Feinstellventil in der vollständig geöffneten Stellung und der Volumenstrom Vₐ dementsprechend in etwa konstant.

Beim Zeitpunkt t2 = 2 Sekunden wird der digitale Stellaktor zum Öffnen des Auf-/Zu-Hubventils betätigt, wie beispielsweise in Fig. 5d zu erkennen ist. Die Betätigung des digitalen Stellaktors 51 des Auf-/Zu-Hubventils erfolgt bei dieser Ausführung unter Verwendung einer Dämpfung mit PT1-Verhalten. Es ist auch denkbar, dass keine Dämpfung verwendet wird, was allerdings eine nahezu instantane Umschaltung des Auf-/Zu-Hubventils zur Folge hätte (nicht dargestellt), mit entsprechend zugehörigem Überschießen des Volumenstromes, bis das Hub-Feinstellventil in einer geschlossenen Stellung gefahren ist. Die Dämpfung, insbesondere PT1-Dämpfung (gemäß der Steuerkurve, wie in Fig. 5d für das Auf-/Zu-Hubventil gezeigt) bewirkt eine Änderung des Durchströmungsquerschnittes bzw. der Volumenströmung V_{d}, welche in etwa komplementär zu dem Verlauf der Öffnungsweite bzw. des Volumenstroms Vₐ des Hub-Feinstellventiles ist. Der gedämpfte Anstieg der Volumenströmung V_{d} des Auf-/Zu-Hubventils entspricht in etwa dem gleichzeitigen Abfall des Volumenstromes Vₐ des parallelgeschalteten Hub-Feinstellventils. Während der Volumenstrom Vₐ durch das Hub-Feinstellventil im Verlauf zwischen t2 = 2 Sekunden bis t3 = 3,5 Sekunden kontinuierlich abnimmt, nimmt der Volumenstrom V_{d} des Auf-/Zu-Hubventils in demselben Zeitraum (zwischen t2 = 2 Sekunden und t3 = 3,5 Sekunden) in nahezu gleicher Form zu. Wie in Fig. 5a zu erkennen, ergibt sich dadurch ein kumulierter Volumenstrom Vₖ, der nahezu konstant dem Volumenstrom im Zeitraum t1 = 1 Sekunde bis t2 = 2 Sekunden und dem Zeitraum t3 = 3,5 Sekunden bis t4 = 4 Sekunden entspricht, wobei in diesen beiden Zeiträumen entweder ausschließlich das Hub-Feinstellventil vollständig geöffnet ist (t1-t3) oder das Auf-/Zu-Ventil vollständig geöffnet (t3-t4) ist.

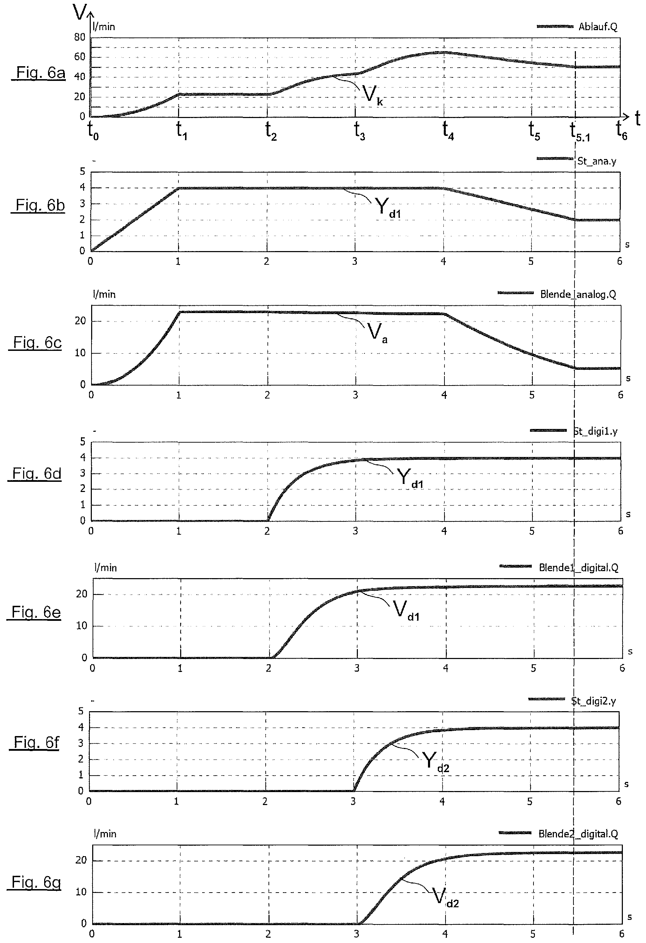

Die Fig. 6a bis 6g betreffen eine Stellventilanordnung mit einem Hub-Feinstellventil und zwei (oder mehr) Auf-/Zu-Hubventilen. Gezeigt ist der zeitliche Verlauf zwischen to = 0 Sekunden und t6 = 6 Sekunden. Fig. 6a zeigt den kumulierten Volumenstrom V_{k.} Fig. 6c zeigt den Volumenstrom durch ein Hub-Feinstellventil, Fig. 6e den Volumenstrom durch ein erstes Auf-/Zu-Hubventil, und Fig. 6g den Volumenstrom eines zweiten Auf-/Zu-Hubventils. Die Fig. 6b zeigt die Steuersignalkurve des Hub-Feinstellventils. Die Fig. 6d und 6f zeigen je eine Steuersignalkurve für eines der Auf-/Zu-Hubventile.

Der Verlauf der Kennlinien entspricht dem Zeitraum to bis t2 im Wesentlichen den zuvor bezüglich der Fig. 5a bis 5e Beschriebenen. Im Zeitraum t2 = 2 Sekunden bis t5 = 5 Sekunden werden die beiden Auf-/Zu-Hubventile geöffnet. Wie das zuvor beschriebene Hubventil sind auch hier die Verläufe der jeweiligen Steuerkurven gemäß einer PT1-Funktion gedämpft, um ein Überschwingen zu verhindern. Das erste Auf-/Zu-Hubventil wird gemäß der Steuerkurve y_{d} so angesteuert, dass ab dem Zeitpunkt t2 = 2 Sekunden der Übergang von Schließ- zu Auf-Stellung erfolgt. Das zweite Auf-/Zu-Hubventil wird gemäß der Steuerkurve y_{d2} gemäß Fig. 6f ab dem Zeitpunkt t3 zum Öffnen veranlasst. Durch die Ansteuerung des jeweiligen Auf-/Zu-Hubventils steigt der jeweilige Volumenstrom V_{d1} bzw. V_{d2} wie in den Fig. 6e und 6g gezeigt, ab dem Ansteuerzeitpunkt an. Da gemäß Fig. 6b währenddessen, vom t2 = 2 Sekunden bis t4 = 4 Sekunden, das Hub-Feinstellventil in der geöffneten Stellung verbleibt, ergibt sich ein kontinuierlicher Anstieg des kumulierten Volumenstromes Vₖ gemäß Fig. 6a.

Wie in Fig. 6c zu erkennen, erfolgt ab dem Zeitpunkt t4 = 4 Sekunden eine Verringerung des Volumenstroms Vₐ durch das Hub-Feinstellventil, wobei die Ansteuerung dergestalt erfolgt, dass zum Zeitpunkt t6 = 6 Sekunden die Hub-Feinstellung in (nicht) vollständig geschlossener Stellung (wie zum Zeitpunkt t4 = 4 Sekunden in der Fig. 5b und 5c) erfolgt, sondern eine Öffnungsweite des Hub-Feinstellventils entsprechend etwa 25% des maximalen Öffnungswertes gewählt ist. Infolgedessen ergibt sich ab dem Zeitpunkt t4 bis zum Zeitpunkt t6 ein Verlauf der kumulierten Volumenstromkurve Vₖ, welche zunächst in Folge der sinkenden Volumenstrom-Durchflusskurve des Hub-Feinstellventiles im Bereich t4 = 4 Sekunden bis t5.1 = 4,5 Sekunden sinkt und ab diesem Zeitpunkt entsprechend der ersten Öffnungsweite des Hub-Feinstellventils konstant verbleibt.

Es ist klar, dass die in den oben beschriebenen, in Fig. 5a - 5e und Fig. 6a - 6g dargestellten Kurven, rein exemplarisch sind und zahlreiche andere Steuerungsvorgänge erfolgen können.

Die in der vorstehenden Beschreibung, den Figuren und den Ansprüchen offenbarten Merkmale können sowohl einzeln als auch in beliebiger Kombination für die Realisierung der Erfindung in den verschiedenen Ausgestaltungen von Bedeutung sein.

### Bezugszeichenliste

- 1, 2: Stellventilanordnung
- 3: Hub-Feinstellventil
- 5: Hubventil
- 11: Gehäuse
- 15: Steuerelektronik
- 30, 50: Durchgangsöffnung
- 31: Feinstellantrieb
- 32, 52: Ventilsitz
- 33, 53: Stößel
- 34: Stößelschaft
- 37, 57: Rückstellfeder
- 38a, 38b: Abschnitt
- 39: Spalt
- 51: Stellaktor
- 54: Schaftabschnitt
- 55: Durchgang
- 56: Federbalgdichtung
- 57: Rückstellfeder
- 58: Magnetkern
- 59: Luftspalt
- 61: Eingang
- 62, 64: Kompartiment
- 63: Ausgang
- 65: Trennwand
- 67, 67': Haltestruktur
- 68: Öffnung
- D₃, D₅: Durchflussfläche
- H₃, H₅: Hub-Längsachse
- S: Strömungsrichtung
- Vₐ, V_{d}, V_{d1}, V_{d2}, Vₖ, Vₖ₁,: Volumenstrom
- y_{d}, y_{d1}, y_{d2}: Steuersignal

## Patentansprüche

1. Stellventilanordnung (1, 2) zum Einstellen einer Prozessfluidströmung einer prozesstechnischen Anlage, wie einem Kraftwerk, einer chemischen Anlage, einer Lebensmittel verarbeitenden Anlage oder dergleichen, umfassend wenigstens ein Hub-Feinstellventil (3) mit einem Feinstellantrieb (31) zum Feineinstellen einer Hub-Feinstellventil-Durchflussfläche (D3); und
wenigstens ein Auf-/Zu-Hubventil (5) mit einem diskreten Stellaktor (51) zum Stellen des Auf-/Zu-Hubventils (5) entweder in eine Öffnungsstellung, in der eine Hubventil-Durchflussfläche (D5) vollständig freigegeben ist, oder eine Schließstellung, in der die Hubventil-Durchflussfläche verschlossen ist,
wobei eine kumulierte Gesamt-Durchflussfläche der Stellventilanordnung (1, 2) durch die Hub-Feinstellventil-Durchflussfläche des wenigstens einen Hub-Feinstellventil (3) und durch die Hubventil-Durchflussfläche des wenigstens einen Auf-/Zu-Hubventil (3) definiert ist,
**dadurch gekennzeichnet, dass**
das wenigstens eine Auf-/Zu-Hubventil (5) eine Dämpfungskinematik, wie ein pneumatischer oder hydraulischer Dämpfer, zum Dämpfen der Hubbewegung umfasst.

2. Stellventilanordnung (1, 2) nach Anspruch 1, wobei der Feinstellantrieb (31) des wenigstens einen Hub-Feinstellventils (3) und/oder der diskrete Stellaktor (51) des wenigstens einen Auf-/Zu-Hubventils (5) in einem Prozessfluid führenden Abschnitt, wie einem Rohrabschnitt (13), des Gehäuses (11) der Stellventilanordnung (1, 2) angeordnet sind.

3. Stellventilanordnung (1, 2) nach Anspruch 2, wobei das beispielsweise zylinderhülsenförmige Gehäuse (11), welches das Prozessfluid von einem Eingang (61) zu einem Ausgang (63) führt, durch eine Trennwand (65) unterteilt in ein eingangsseitiges, stromaufwärtiges Prozessfluid führendes Kompartiment (62) und ein ausgangsseitiges, stromabwärtiges Prozessfluid führendes Kompartiment (64), wobei die Trennwand (65) mit Durchflussöffnungen (30, 50) versehen ist, die in einem geschlossenen Zustand der Stellventilanordnung (1, 2) verschlossen sind durch Stößel (33, 53) des wenigstens einen Hub-Feinstellventils (3) und des wenigsten einen Auf-/Zu-Hubventils (5).

4. Stellventilanordnung (1, 2) nach Anspruch 2 oder 3, wobei der Feinstellantrieb (31) und/oder der Stellaktor (51) derart in dem Gehäuse (11) angeordnet sind, dass der Feinstellantrieb (31) und/oder der Stellaktor (51) von Prozessfluid umströmt sind.

5. Stellventilanordnung (1, 2) nach Anspruch 4, wobei der Feinstellantrieb (31) und/oder der Stellaktor (51) in Richtung einer jeweiligen Hub-Längsachse (H3, H5) entlang der jeweiligen Längserstreckung von Prozessfluid vollumfänglich umströmt sind, wobei eine Hauptströmungsrichtung (S) des Prozessfluids in dem Gehäuse (11), im Wesentlichen der Hub-Längsachse (H3, H5) des wenigstens einen Hub-Feinstellventils (3) und/oder des wenigstens einen Auf-/Zu-Hubventils (5) entspricht.

6. Stellventilanordnung (1, 2) nach einem der Ansprüche 2 bis 5, wobei das Gehäuse (11) ein Rohr mit einem eingangsseitigen und/oder einem ausgangsseitigen Befestigungsflansch (12, 14) ist.

7. Stellventilanordnung (2) nach einem der vorstehenden Ansprüche, wobei das wenigstens eine Hub-Feinstellventil (3) und/oder das wenigstens eine Auf-/Zu-Hubventil (5) druckentlastet ausgeführt ist, wobei ein Hubventilglied, wie ein Stößel (33, 53), des Feinstellventils (3) bzw. des Auf-/Zu-Hubventils (5) einen sich in dessen Hub-Längsachse (H3, H5) erstreckenden Durchgang (35, 55) aufweist.

8. Stellventilanordnung (1, 2) nach einem der vorstehenden Ansprüche, wobei der diskrete Stellaktor (51) des wenigstens einen Auf-/Zu-Hubventils (5) einen elektrischen Schalt-Aktor umfasst, wie ein elektromagnetischer Hubmagnet, ein Piezoelement oder dergleichen, wobei der elektrische Schalt-Aktor wenigstens eine stabile Stellung definiert, die mit der Öffnungsstellung und/oder der Schließstellung des Auf-/Zu-Hubventils (5) korrespondiert, wobei ein bzw. eine zum Wechseln zwischen den Stellungen erforderliche(r) Betätigungsstrom und/oder Betätigungsspannung größer ist als ein bzw. eine zum Halten der ersten oder der zweiten Stellung erforderlicher Haltestrom und/oder Haltespannung.

9. Stellventilanordnung (1, 2) nach einem der vorstehenden Ansprüche, wobei das wenigstens eine Hub-Feinstellventil (3) und das wenigstens eine Auf-/Zu-Hubventil (5) mittels einer Steuerelektronik (15) der Stellventilanordnung (1, 2) für eine im Wesentlichen glatte und/oder stufenfreie Gesamtdurchflusskennlinie der Stellventilanordnung (1, 2) aufeinander abgestimmt sind.

10. Verfahren zum Betätigen einer nach einem der vorstehenden Ansprüchen ausgeführten Stellventilanordnung (1, 2) zum Einstellen einer Prozessfluidströmung einer prozesstechnischen Anlage, wie einem Kraftwerk, einer chemischen Anlage, einer Lebensmittel verarbeitenden Anlage oder dergleichen, wobei die Stellventilanordnung parallel geschaltet wenigstens ein Hub-Feinstellventil (3) mit einer analogen Durchflusskennlinie und wenigstens ein Auf-/Zu-Hubventil (5) mit einer digitalen Durchflusskennlinie umfasst,
wobei die Ansteuerung des wenigstens einen Hub-Feinstellventils (3) und des wenigstens einen Auf-/Zu-Hubventils (5) derart aufeinander abgestimmt sind, dass die Stellventilanordnung (1, 2) eine im Wesentlichen glatte und/oder stufenfreie analoge Gesamtdurchflusskennlinie hat,
**dadurch gekennzeichnet, dass**
das wenigstens eine Auf-/Zu-Hubventil (5) eine Dämpfungskinematik, wie ein pneumatischer oder hydraulischer Dämpfer, zum Dämpfen der Hubbewegung umfasst.

11. Verfahren nach Anspruch 10, wobei die Ansteuerung des wenigstens einen Hub-Feinstellventils ein kontinuierliches Öffnen des Hub-Feinstellventils ausgehend von einer geschlossenen Feinstellventil-Durchflussfläche zu einer geweiteten weiten Feinstellventil-Durchflussfläche umfasst.

12. Verfahren nach Anspruch 11, umfassend einen Schaltschritt, während dem gleichzeitig das Auf-/Zu-Hubventil (5) aus der Schließstellung in die Öffnungsstellung verbracht wird und die Feinstellventil-Durchflussfläche des Hub-Feinstellventils (3) von der geweiteten Feinstellventil-Durchflussfläche (D3) zu der geschlossenen Feinstellventil-Durchflussfläche wechselt.

13. Verfahren nach einem der Ansprüche 10 bis 12, wobei die Umschaltung des Auf-/Zu-Hubventils (5) zwischen der Schließstellung und der Öffnungsstellung unter Einfluss einer PT1-Dämpfung, wie eines pneumatischen oder hydraulischen Dämpfers, erfolgt.

14. Verfahren nach einem der Ansprüche 10 bis 12, wobei die Umschaltung des Auf-/Zu-Hubventils (5) zwischen der Schließstellung und der Öffnungsstellung eine phasenweise pulsweitenmodulierte Betätigung des Auf-/Zu-Hubventils umfasst, wobei während einer Umschaltphase des Auf-/Zu-Hubventils (5) zwischen dessen Schließstellung und dessen Öffnungsstellung für die Dauer der Umschaltphase das Auf-/Zu-Hubventils derart pulsweitenmoduliert angesteuert werden, dass das Auf-/Zu-Hubventil (5) innerhalb der Umschaltphase zahlreiche Stellungswechsel zwischen der Schließstellung und der Öffnungsstellung vollführt, wobei sich schrittweise die Dauer der aufeinanderfolgenden Schließstellungs-Intervalle und Öffnungsstellungs-Intervalle ändert.

## Claims

1. A control valve assembly (1, 2) for controlling a process fluid flow in a process engineering plant, such as a power plant, a chemical plant, a food processing plant, or the like, comprising at least one fine-adjustment poppet valve (3) having a fine-adjustment drive (31) for fine adjustment of a fine-adjustment poppet valve flow area (D3); and at least one open/close poppet valve (5) having a discrete actuator (51) for placing the open/close poppet valve (5) either into an open position, in which a poppet valve flow area (D5) is completely open, or into a closed position, in which the poppet valve flow area is closed off, wherein a cumulative total flow area of the control valve assembly (1, 2) is defined by the fine-adjustment poppet valve flow area of the at least one fine-adjustment poppet valve (3) and by the poppet valve flow area of the at least one open/close poppet valve (5), **characterized in that** the at least one open/close poppet valve (5) comprises a damping kinematics, such as a pneumatic or hydraulic damper, to dampen the valve stroke movement.

2. The control valve assembly (1, 2) according to claim 1, wherein the fine-adjustment drive (31) of the at least one fine-adjustment poppet valve (3) and/or the discrete actuator (51) of the at least one open/close poppet valve (5) are arranged within a process fluid-carrying section, such as a pipe section (13), of the housing (11) of the control valve assembly (1, 2).

3. The control valve assembly (1, 2) according to claim 2, wherein the housing (11), which is for example in the form of a cylindrical sleeve and which guides the process fluid from an inlet (61) to an outlet (63), is divided by a partition wall (65) into an inlet-side, upstream process fluid-carrying compartment (62) and an outlet-side, downstream process fluid-carrying compartment (64), wherein the partition wall (65) is provided with flow openings (30, 50) which, in a closed state of the control valve assembly (1, 2), are closed off by plungers (33, 53) of the at least one fine-adjustment poppet valve (3) and of the at least one open/close poppet valve (5).

4. The control valve assembly (1, 2) according to claim 2 or 3, wherein the fine-adjustment drive (31) and/or the discrete actuator (51) are arranged within the housing (11) in such a way that the fine-adjustment drive (31) and/or the discrete actuator (51) are passed by process fluid flow.

5. The control valve assembly (1, 2) according to claim 4, wherein the fine-adjustment drive (31) and/or the discrete actuator (51) are passed by process fluid flow over their whole circumference in the direction of a respective stroke longitudinal axis (H3, H5) along the respective longitudinal extension, wherein a main flow direction (S) of the process fluid in the housing (11) essentially corresponds to the travel longitudinal axis (H3, H5) of the at least one fine-adjustment poppet valve (3) and/or of the at least one open/close poppet valve (5).

6. The control valve assembly (1, 2) according to one of claims 2 to 5, wherein the housing (11) is a pipe with an input-side and/or an output-side mounting flange (12, 14).

7. The control valve assembly (2) according to one of the preceding claims, wherein the at least one fine-adjustment poppet valve (3) and/or the at least one open/close poppet valve (5) is pressure-relieved, wherein a poppet valve element, such as a plunger (33, 53), of the fine adjustment valve (3) or of the open/close poppet valve (5) has a through passage (35, 55) extending in the travel longitudinal axis (H3, H5) thereof.

8. The control valve assembly (1, 2) according to one of the preceding claims, wherein the discrete actuator (51) of the at least one open/close poppet valve (5) comprises an electrical switching actuator, such as an electromagnetic solenoid, a piezo-element, or the like, wherein said electrical switching actuator defines at least one stable position which corresponds to the open position and/or the closed position of the open/close poppet valve (5), wherein an actuating current and/or actuating voltage required to switch between the positions is greater than a holding current and/or holding voltage required to maintain the first or the second position.

9. The control valve assembly (1, 2) according to one of the preceding claims, wherein the at least one fine-adjustment poppet valve (3) and the at least one open/close poppet valve (5) are coordinated with each other by means of control electronics (15) of the control valve assembly (1, 2) for a substantially smooth and/or step-free overall flow characteristic of the control valve assembly (1, 2).

10. A method for actuating a control valve assembly (1, 2) configured according to one of the preceding claims for controlling a process fluid flow of a process engineering plant, such as a power plant, a chemical plant, a food processing plant, or the like, wherein the control valve assembly comprises, connected in parallel, at least one fine-adjustment poppet valve (3) with an analogue flow characteristic and at least one open/close poppet valve (5) with a digital flow characteristic, wherein the activation of the at least one fine-adjustment poppet valve (3) and the at least one open/close poppet valve (5) are coordinated in such a way that the control valve assembly (1, 2) has an essentially smooth and/or continuous analogue overall flow characteristic, **characterized in that** the at least one open/close poppet valve (5) comprises a damping kinematics, such as a pneumatic or hydraulic damper, to dampen the valve stroke movement.

11. The method according to claim 10, wherein the activation of the at least one fine-adjustment poppet valve comprises a continuous opening of the fine-adjustment poppet valve from an initially closed fine-adjustment valve flow area to a dilated, wide fine-adjustment valve flow area.

12. The method according to claim 11, comprising a switching step, during which simultaneously the open/close poppet valve (5) is moved from the closed position into the open position and the fine-adjustment valve flow area of the fine-adjustment poppet valve (3) switches from the dilated fine-adjustment valve flow area (D3) to the closed fine-adjustment valve flow area.

13. The method according to one of claims 10 to 12, wherein the open/close poppet valve (5) switches between the closed position and the open position under the influence of a PT1 damping device, such as a pneumatic or hydraulic damper.

14. The method according to one of claims 10 to 12, wherein the switchover of the open/close poppet valve (5) between the closed position and the open position comprises a phase-based pulse-width modulated actuation of the open/close poppet valve, wherein during a switching phase of the open/close poppet valve (5) between its closed position and its open position, the open/close poppet valve is actuated in a pulse-width modulated manner for the duration of the switching phase such that the open/close poppet valve (5) performs numerous position changes between the closed position and the open position within the switching phase, wherein the duration of the successive closed-position intervals and open-position intervals changes stepwise.

## Revendications

1. Ensemble de vannes de régulation (1, 2) destiné à régler un débit de fluide de procédé d'une installation de procédé technique, telle qu'une centrale électrique, une installation chimique, une installation de transformation alimentaire ou analogue, comprenant au moins vanne de réglage fin (3) à levée, dotée d'un entraînement de réglage fin (31), destiné au réglage fin d'une section d'écoulement (D3) de la vanne de réglage fin ; et au moins une vanne à levée tout ou rien (5), dotée d'un actionneur de réglage (51) discret, destiné à régler la vanne à levée tout ou rien (5) soit dans une position d'ouverture, dans laquelle une section d'écoulement (D5) de la vanne à levée est totalement libérée ou une position de fermeture, dans laquelle la section d'écoulement de la vanne à levée est fermée, une section d'écoulement totale cumulée de l'ensemble de vannes de régulation (1, 2) étant définie par la section d'écoulement de vanne de réglage fin à levée de l'au moins une vanne de réglage fin (3) à levée et par la section d'écoulement de vanne à levée de l'au moins une vanne à levée tout ou rien (3), **caractérisé en ce que** l'au moins une vanne à levée tout ou rien (5) comprend une cinématique d'amortissement, telle qu'un amortisseur pneumatique ou hydraulique, destinée à amortir le déplacement en levée.

2. Ensemble de vannes de régulation (1, 2) selon la revendication 1, l'entraînement de réglage fin (31) de l'au moins une vanne de réglage fin (3) à levée et / ou l'actionneur de réglage (51) discret de l'au moins une vanne à levée tout ou rien (5) étant placés dans une partie conduisant du fluide de procédé, telle qu'un tronçon de tube (13) du carter (11) de l'ensemble de vannes de régulation (1, 2).

3. Ensemble de vannes de régulation (1, 2) selon la revendication 2, le carter (11) par exemple en forme de manchon cylindrique, lequel conduit le fluide de procédé d'une entrée (61) vers une sortie (63) étant divisé par une paroi de séparation (65) en un compartiment (62) côté entrée, conduisant du fluide de procédé en amont et en un compartiment (64) côté sortie, conduisant du fluide de procédé en aval, la paroi de séparation (65) étant munie orifices d'écoulement (30, 50), qui lorsque l'ensemble de vannes de régulation (1, 2) est fermé, sont obturés par des poussoirs (33, 53) de l'au moins une vanne de réglage fin (3) à levée et de l'au moins un vanne à levée tout ou rien (5).

4. Ensemble de vannes de régulation (1, 2) selon la revendication 2 ou 3, l'entraînement de réglage fin (31) et / ou l'actionneur de réglage (51) étant placés dans le carter (11), de telle sorte que l'entraînement de réglage fin (31) et / ou l'actionneur de réglage (51) soient contournés par un écoulement de fluide de procédé.

5. Ensemble de vannes de régulation (1, 2) selon la revendication 4, l'entraînement de réglage fin (31) et / ou l'actionneur de réglage (51) étant contournés sur toute leur périphérie par un écoulement de fluide de procédé dans la direction d'un axe longitudinal de levée (H3, H5) respectif, le long de l'extension longitudinale respective, une direction d'écoulement principal (S) du fluide de procédé dans le carter (11) correspondant sensiblement à l'axe longitudinal de levée (H3, H5) de l'au moins une vanne de réglage fin (3) à levée et / ou de l'au moins une vanne à levée tout ou rien (5).

6. Ensemble de vannes de régulation (1, 2) selon l'une quelconque des revendications 2 à 5, le carter (11) étant un tube, doté d'une bride de fixation (12, 14) côté entrée et / ou côté sortie.

7. Ensemble de vannes de régulation (2) selon l'une quelconque des revendications précédentes, l'au moins une vanne de réglage fin (3) à levée et / ou l'au moins une vanne à levée tout ou rien (5) étant conçues en décharge de pression, un organe de vanne à levée, tel qu'un poussoir (33, 53), de la vanne de réglage fin (3) ou de la vanne à levée tout ou rien (5) comportant un passage (35, 55) s'étendant dans l'axe longitudinal de levée (H3, H5) de celle-ci.

8. Ensemble de vannes de régulation (1, 2) selon l'une quelconque des revendications précédentes, l'actionneur de réglage (51) discret de l'au moins une vanne à levée tout ou rien (5) comprenant un actionneur de commutation électrique, tel qu'un électroaimant de levage, un élément piézoélectrique ou analogues, l'actionneur de commutation électrique définissant au moins une position stable, qui correspond avec la position d'ouverture et / ou la position de fermeture de la vanne à levée tout ou rien (5), un courant d'actionnement et / ou une tension d'actionnement nécessaire pour un changement entre les positions étant supérieur(e) à un courant d'actionnement et / ou à une tension d'actionnement nécessaire pour maintenir la première ou la deuxième position.

9. Ensemble de vannes de régulation (1, 2) selon l'une quelconque des revendications précédentes, l'au moins une vanne de réglage fin (3) à levée et l'au moins une vanne à levée tout ou rien (5) étant adaptées l'une à l'autre par un système électronique de commande (15) de l'ensemble de vannes de régulation (1, 2) pour une caractéristique de débit total lisse et / ou sans palier de l'ensemble de vannes de régulation (1, 2).

10. Procédé, destiné à actionner un ensemble de vannes de régulation (1, 2) conçu selon l'une quelconque des revendications précédentes pour régler un débit de fluide de procédé d'une installation de procédé technique, telle qu'une centrale électrique, une installation chimique, une installation de transformation alimentaire ou analogue, l'ensemble de vannes de régulation comprenant en montage parallèle au moins une vanne de réglage fin (3) à levée avec une caractéristique de débit analogique et au moins une vanne à levée tout ou rien (5) avec une caractéristique dé débit numérique, l'activation de l'au moins une vanne de réglage fin (3) à levée et de l'au moins une vanne à levée tout ou rien (5) étant adaptées l'une à l'autre de telle sorte que l'ensemble de vannes de régulation (1, 2) présente une caractéristique de débit total analogique lisse et / ou sans palier, **caractérisé en ce que** l'au moins une vanne à levée tout ou rien (5) comprend une cinématique d'amortissement, telle qu'un amortisseur pneumatique ou hydraulique, destinée à amortir le déplacement en levée.

11. Procédé selon la revendication 10, l'activation de l'au moins une vanne de réglage fin à levée comprenant une ouverture continue de la vanne de réglage fin à levée en partant d'une section d'écoulement fermée de la vanne de réglage fin vers une section d'écoulement large élargie de la vanne de réglage fin.

12. Procédé selon la revendication 11, comprenant une étape de commutation, pendant laquelle simultanément la vanne à levée tout ou rien (5) est amenée de la position de fermeture dans la position d'ouverture et la section d'écoulement de vanne de réglage fin de la vanne de réglage fin (3) à levée change de la section d'écoulement (D3) élargie de la vanne de réglage fin vers la section d'écoulement fermée de la vanne de réglage fin.

13. Procédé selon l'une quelconque des revendications 10 à 12, l'inversion de la vanne à levée tout ou rien (5) entre la position de fermeture et la position d'ouverture s'effectuant sous l'effet d'un amortissement de type PT1, tel que celui procuré par un amortisseur pneumatique ou hydraulique.

14. Procédé selon l'une quelconque des revendications 10 à 12, le basculement de la vanne à levée tout ou rien (5) entre la position de fermeture et la position d'ouverture comprenant un actionnement par modulation de largeur d'impulsion, effectué par phases, de la vanne à levée tout-ou-rien, pendant une phase de basculement de la vanne à levée tout ou rien (5) entre sa position de fermeture et sa position d'ouverture, pour la durée de la phase de basculement, la vanne à levée tout ou rien étant activée par modulation de largeur d'impulsion de telle sorte que la vanne à levée tout ou rien (5) réalise au sein de la phase de basculement de nombreux changements de position entre la position de fermeture et la position d'ouverture, la durée des intervalles successifs de position de fermeture et de position d'ouverture variant par paliers.
